# EUROPÄISCHE PATENTSCHRIFT

(11) **EP 4 214 703 B1**
(45) Veröffentlichungstag und Bekanntmachung des Hinweises auf die Patenterteilung: **29.01.2025**
(21) Anmeldenummer: 22818070.9
(22) Anmeldetag: 18.11.2022
(51) Int. Cl.: G10L 15/22, G06F 40/30, B60R 16/02, G06F 3/16

(54) **VERFAHREN ZUM BETREIBEN EINES SPRACHDIALOGSYSTEMS UND SPRACHDIALOGSYSTEM**
METHOD FOR OPERATING A VOICE DIALOGUE SYSTEM, AND VOICE DIALOGUE SYSTEM
PROCÉDÉ DE FONCTIONNEMENT DE SYSTÈME DE DIALOGUE VOCAL ET SYSTÈME DE DIALOGUE VOCAL

(30) Priorität: 07.12.2021 DE 102021006023
(43) Veröffentlichungstag der Anmeldung: 26.07.2023
(73) Patentinhaber: Mercedes-Benz Group AG, 70372 Stuttgart (DE)
(72) Erfinder: Panknin, Jasper, 75365 Calw (DE)
(74) Vertreter: Novagraaf Group
(86) Internationale Anmeldenummer: PCT/EP2022/082381
(87) Internationale Veröffentlichungsnummer: WO 2023/104471

(56) Entgegenhaltungen:
- EP-A1- 3 115 886
- US-A1- 2020 302 924

## Beschreibung

Die Erfindung betrifft ein Verfahren zum Betreiben eines Sprachdialogsystems, bei dem Sprachbefehle einer Spracheingabe erfasst und zur weiteren Verarbeitung mit einer Priorität versehen werden. Die Erfindung betrifft außerdem ein Sprachdialogsystem, welches zur Durchführung eines derartigen Verfahrens eingerichtet ist.

Sprachdialogsysteme bzw. Sprachassistenten in Fahrzeugen sind soweit aus dem Stand der Technik bekannt. Problematisch wird es immer dann, wen gleiche oder phonetisch ähnliche Befehle für verschiedene Systeme zur Steuerung eingesetzt werden können. Aus der US 2008/0059195 A1 ist z.B. ein Sprachdialogsystem zur Bedienung von Fahrzeugfunktionen bekannt. Dabei werden die Fahrzeugfunktionen jeweils einer Gruppe von Befehlen zugeordnet. Gleichzeitig werden den Befehlen und der jeweiligen Fahrzeugfunktion Prioritäten zugeordnet. Auf Basis dieser Prioritäten erfolgt dann die weitere Verarbeitung, um so Konflikte in Bezug auf mit denselben oder ähnlichen Befehlen aktivierbare Funktionen zu vermeiden.

Neben einer solchen Anpassung phonetisch ähnlicher Sprachbefehle für verschiedene Funktionen ist es in der Praxis jedoch häufig auch so, dass Spracheingaben mehrere einzelne Sprachbefehle enthalten. Diese werden dann häufig nicht, nicht vollständig oder sogar falsch erkannt. Dann wird oft ein falscher Befehl oder nur ein Teil des oder der Befehle, insbesondere ein erkannter Sprachbefehl, verarbeitet und im Anschluss ausgeführt. Falls überhaupt mehrere Sprachbefehle in der Spracheingabe korrekt erkannt werden, dann werden diese typischerweise in der geäußerten bzw. gesprochenen Reihenfolge abgearbeitet, was häufig nicht sinnvoll ist. Da die sprechende Person sich typischerweise keine Gedanken über eine serielle Abarbeitung ihrer Sprachbefehle macht, entspricht eine solche Reihenfolge auch oft nicht ihrem eigentlichen Wunsch.

Die US 2020/0302924 A1 offenbar ein trainiertes Modell zur Bestimmung einer Ausführungsreihenfolge von Anweisungen, die von einem Nutzer mittels einer Spracheingabe getätigt werden. Das trainierte Modell gibt eine Präferenz einer Mehrheit von Benutzern wieder, wobei beim Training bedingte Anweisungen Berücksichtigung finden.

Aus der EP 3 115 886 A1 ist bekannt Systemantworten Ausführungseinrichtungen zuzuordnen, für die Prioritäten definiert sind. Die Ausgabezeitdaten werden in Abhängigkeit von den Prioritäten der jeweils zugeordneten Ausführungseinrichtungen erzeugt. Die Ausgabe der Ausgabedaten kann dadurch vorteilhafterweise in einer zeitlichen Abfolge durchgeführt werden, welche an die jeweiligen Ausführungseinrichtungen angepasst ist. Die Prioritäten, die für die Ausführungseinrichtungen definiert sind, können dabei eine weitere Priorisierung für verschiedene Systemantworten der gleichen Ausführungseinrichtungen umfassen.

Die Aufgabe der hier vorliegenden Erfindung besteht dem gegenüber darin ein Verfahren bereitzustellen, welches bei mehreren hintereinander gesprochenen Befehlen eine sinnvolle Reihenfolge zur Ausführung ermöglicht.

Erfindungsgemäß wird diese Aufgabe durch ein Verfahren mit den Merkmalen im Anspruch 1, und hier insbesondere im kennzeichnenden Teil des Anspruchs 1, gelöst. Vorteilhafte Ausgestaltungen und Weiterbildungen ergeben sich aus den hiervon abhängigen Unteransprüchen. Außerdem löst ein Sprachdialogsystem gemäß Anspruch 9 die Aufgabe.

Das erfindungsgemäße Verfahren, welches bevorzugt in einem Fahrzeug zum Einsatz kommen kann, sieht es vor, dass bei mehreren aufeinanderfolgenden Sprachbefehlen in einer einzigen Spracheingabe jedem der erkannten Sprachbefehle eine inhaltliche Gruppe von Befehlen zugeordnet wird. Diese inhaltlichen Gruppen können beispielsweise die Steuerung von Fahrzeugfunktionen als eine der Gruppen sein oder die Steuerung eines Navigationssystems als eine andere Gruppe. Weitere Gruppen könnten beispielsweise die Steuerung eines Mediensystems, die Steuerung der Innenraumbeleuchtung, die Bedienung eines Telefoniesystems oder dergleichen sein. Der Sprachbefehl selbst wird dann mit einem für die jeweilige Gruppe vorgegebenen ersten Prioritätswert verknüpft. Dieser Prioritätswert kann prinzipiell fest vorgegeben sein oder er lässt sich auch flexibel anpassen, beispielsweise durch den Fahrzeughersteller programmieren, aber auch anhand von Nutzervorgaben individuell durch den Nutzer einstellen. Auch ein automatisches Einlernen auf die Nutzerpräferenzen im Laufe der Zeit ist hier denkbar.

Nachdem der entsprechende Sprachbefehl mit einer Gruppe verbunden und dem entsprechenden Prioritätswert verknüpft worden ist, wird nun der Sprachbefehl selbst innerhalb der Gruppe entsprechend einer vorgegebenen Prioritätenliste der der Gruppe zugeordneten Befehle mit einem zweiten Prioritätswert versehen. Die einzelnen Befehle innerhalb einer Gruppe sind also wiederum über eine Prioritätenliste in ihrer Reihenfolge priorisiert. Auch für diese Prioritätenliste gilt, dass diese entsprechend flexibel angepasst werden kann, beispielsweise wiederum programmiert, gelernt oder auch durch den Nutzer eingestellt.

Aus dem ersten und dem zweiten Prioritätswert wird dann in einem Folgenschritt ein dritter Prioritätswert gebildet, beispielsweise indem diese beiden Werte aufsummiert werden. Der entscheidende Aspekt des Verfahrens liegt dann letztlich darin, dass die Sprachbefehle unabhängig von ihrer gesprochenen Reihenfolge entsprechend ihrer finalen Prioritätswerte, hier also des dritten Prioritätswerts, welcher vorzugsweise die Summe der ersten beiden Prioritätswerte ist, in eine Reihenfolge einsortiert und in eben dieser Reihenfolge der Abarbeitung zugeführt werden.

Mit dieser Art der doppelten Priorisierung der Werte zuerst entsprechend der Gruppe, welcher der Sprachbefehl zugeordnet wird und dann innerhalb der Gruppe entsprechend einer Prioritätenliste lässt sich bereits sehr gut eine entsprechende Priorisierung zum Festlegen einer sinnvollen Reihenfolge der mehreren aufeinanderfolgend gesprochenen Sprachbefehle einer Spracheingabe erreichen.

Eine weitere sehr günstige Ausgestaltung des erfindungsgemäßen Verfahrens kann es dabei vorsehen, dass der zweite Prioritätswert kleiner als die Differenz zwischen zwei benachbarten ersten Prioritätswerten ist. Insbesondere bei der Variante, bei welcher der erste und der zweite Prioritätswert aufsummiert werden, ist dies ein entscheidender Vorteil. Durch die Ausgestaltung des ersten Prioritätswerts beispielsweise in 10er-Sprüngen und der Ausgestaltung des zweiten Prioritätswerts beispielsweise in 1er-Sprüngen wird erreicht, dass wenn ein erkannter Sprachbefehl gemäß seiner Gruppenzuordnung priorisiert ist, er die zugeordnete Gruppe nicht durch den zweiten Prioritätswert wieder verlassen und damit die Priorisierung anhand der Gruppe verändern kann. Die Priorisierung anhand der Gruppe hat durch diese spezielle Ausgestaltung der Größe der beiden Prioritätswerte zueinander also immer Vorrang vor der Einordnung entsprechend der Prioritätenliste der Gruppe.

Eine weitere vorteilhafte Ausgestaltung des erfindungsgemäßen Verfahrens sieht es ferner vor, dass bei gleichen finalen Prioritätswerten die Sortierung in die Reihenfolge gemäß der gesprochenen Reihenfolge der Sprachbefehle erfolgt. Haben also zwei Sprachbefehle denselben finalen Prioritätswert, kann das System selbstständig anhand der Priorisierung keine sinnvolle Reihenfolge der Befehle festlegen. In diesem Fall wird die Reihenfolge aufgegriffen, welche die Sprachbefehle innerhalb der Spracheingabe hatten, der zuerst geäußerte Sprachbefehl wird also vor dem danach geäußerten Sprachbefehl mit derselben finalen Priorität einsortiert und entsprechend abgearbeitet.

Das erfindungsgemäße Verfahren wertet nun ferner die Spracheingabe bezüglich Temporaladverbien zu den Sprachbefehlen aus. Solche Temporaladverbien könnten beispielsweise vorher oder nachher umfassen und werden in der Praxis so eingesetzt, dass beispielsweise in der Spracheingabe geäußert wird, dass ein erster Befehl vor einem weiteren Befehl ausgeführt werden soll, dass dieser danach ausgeführt werden soll oder dass eine durch den Befehl initiierte Aktion zuerst oder zuletzt ausgeführt werden soll. Das erfindungsgemäße Verfahren sieht im Falle von solchen erfassten Temporaladverbien vor, dass für jede der erkannten Richtungen, also ob der Befehl entsprechend vorher oder nachher ausgeführt werden soll, ein Korrekturwert erzeugt wird, der sich mit jedem weiteren Temporaladverb in derselben Richtung im gleichen Sinn verändert. Im gleichen Sinn bedeutet dabei, dass ein Aufwerten, also ein Vergrößern des Prioritätswerts, aufgrund eines vorher im Falle eines weiteren vorhers zu einem weiteren Erhöhen des Prioritätswerts führt und umgekehrt. Dabei ist es prinzipiell egal, wie die Sortierung der Reihenfolge entsprechend der Prioritätswerte erfolgt, also ob zuerst der höchste oder zuerst der niedrigste Wert in der Reihenfolge einsortiert wird, nur muss die hier gewählte Veränderung selbstverständlich zu diesem Grundprinzip der Veränderung des Prioritätswerts passen.

Der jeweilige dritte Prioritätswert jedes Sprachbefehls wird abschließend mit dem so über die Temporaladverbien, falls diese vorhanden sind, erzeugten Korrekturwert verrechnet.

Auch hier kann vorzugsweise wieder ein einfaches Aufsummieren des Korrekturwerts und des dritten Prioritätswerts, welcher seinerseits vorzugsweise aus der Summe des ersten und des zweiten Prioritätswerts besteht, erfolgen.

Eine besonders günstige Ausgestaltung dieser Variante des erfindungsgemäßen Verfahrens sieht es dabei außerdem vor, dass der Korrekturwert je nach Richtung des Temporaladverbs einen positiven oder negativen Korrekturfaktor umfasst. Damit ließe sich über das Vorzeichen des Korrekturwerts bei weiterhin einfacher Berechnung beispielsweise durch eine Summenbildung insbesondere die erkannte Richtung abbilden. Je nachdem, ob an Position 1 der höchste oder der niedrigste Prioritätswert einsortiert wird, müsste dementsprechend beispielsweise bei der bevorzugten Behandlung je niedriger der Prioritätswert ist die Vorher-Richtung mit dem Faktor -1 und die Nachher-Richtung mit dem Faktor +1 entsprechend versehen werden, um die gewünschte zusätzliche Priorisierung durch die Temporaladverbien zu erhalten.

Ergänzend lässt sich dann in jeder Richtung ein Zähler mit jedem weiteren Temporaladverb hochschalten, um so durch eine Multiplikation des Zählers mit dem zuerst festgelegten Korrekturwert den Prioritätswert entsprechend anzupassen. Der Betrag des Korrekturfaktors kann dabei vorzugsweise größer als der größte erste Prioritätswert der Gruppe mit dem höchsten Prioritätswert vorgegeben werden, um so also bei erkannten Temporaladverbien die Priorisierung über die Temporaladverbien mit Vorrang vor die Priorisierung durch die Gruppen zu stellen. Dies hilft dabei Überschneidungen zu vermeiden und eine Entzerrung der einsortierten Sprachbefehle innerhalb der Reihenfolge zu erreichen.

Ferner kann es gemäß einer sehr günstigen Ausgestaltung des erfindungsgemäßen Verfahrens alternativ oder ergänzend auch vorgesehen sein, dass die Spracheingabe bezüglich konkreter Angaben zur Reihenfolge der Sprachbefehle ausgewertet wird, beispielsweise wenn eine Spracheingabe einen ersten Sprachbefehl und dann in der Verbindung damit beispielsweise ein "und danach" oder "aber zuerst" mit einem weiteren Sprachbefehl umfasst. Eine so erkannte Reihenfolge, welche ja offensichtlich dem Willen der die Spracheingabe verursachenden Person entspricht, wird dann vorrangig zu den finalen Prioritätswerten, also dem dritten Prioritätswert oder dem mit dem Korrekturwert verrechneten dritten Prioritätswert, verwendet.

Dabei kann es durch die konkreten Angaben zur Reihenfolge zu potenziellen Lücken innerhalb der Reihenfolge der Sprachbefehle kommen, wenn beispielsweise bei der Spracheingabe ein "als drittes" gesprochen wird, obwohl es nur einem vorherigen Befehl gab oder dergleichen. Solche Lücken in der Reihenfolge der priorisierten und/oder eingeordneten Sprachbefehle sind aber unerwünscht, da sie zu unnötigen Verzögerungen im Ablauf führen. Das Verfahren kann es deshalb vorsehen, solche Lücken entsprechend aufzufüllen und im Falle einer entstehenden Lücke in der Reihenfolge die in der Reihenfolge nachfolgenden Sprachbefehle jeweils um eine Position nach vorn zu verschieben, um so die Lücke entsprechend zu schließen.

Gemäß einer vorteilhaften Ausgestaltung ist es ferner so, dass die Sprachbefehle auf Ähnlichkeit geprüft werden, wobei im Falle von Sprachbefehlen, welche einen vorgegebenen Ähnlichkeitsgrad überschreiten, Sprachbefehle aus derselben Gruppe von Sprachbefehlen zusammengefasst werden. So können beispielsweise Sprachbefehle wie "Aktiviere die Sitzheizung am Fahrersitz", "Aktiviere die Sitzheizung am Beifahrersitz" zu einem einzigen Befehl zusammengefasst werden, in dem der Befehl "Aktiviere die Sitzheizung vorne" ausgeführt wird. Hierdurch wird zeitlicher Aufwand durch die serielle Abarbeitung der Befehle entsprechend eingespart und in der Reihenfolge weiter hinten stehende Sprachbefehle kommen früher zur Ausführung. Die Überprüfung auf potenzielle Ähnlichkeiten kann dabei über eine semantische Prüfung erfolgen. Es können alternativ dazu oder insbesondere in Ergänzung dazu aber auch Zusammenfassungen von Sprachbefehlen anhand von Tabellen, Logikfunktionen und/oder dergleichen vorgesehen werden.

Insbesondere können dabei die einzelnen Sprachbefehle paarweise auf Ähnlichkeit geprüft werden, da insbesondere das Zusammenfassen von sehr ähnlichen direkt hintereinander gesprochenen Befehlen eine besondere Effizienz ermöglicht, während weiter auseinander liegend gesprochene Befehle eine solche Möglichkeit bzw. Notwendigkeit häufig nicht mehr erkennen lassen.

Die Sprachbefehle können ferner gemäß einer außerordentlich günstigen Weiterbildung des erfindungsgemäßen Verfahrens auf definierte Regeln überprüft werden, um logisch nicht sinnvolle Sprachbefehle zu eliminieren oder durch weiteren Sprachbefehle aus derselben Gruppe von Sprachbefehlen zu ersetzen. Beziehen sich beispielsweise zwei zeitlich aufeinanderfolgende Sprachbefehle auf das Abspielen von Medieninhalten, dann kann beispielsweise eine Regel definiert werden, dass nur der zeitlich spätere Sprachbefehl ausgeführt wird und der zuvor gesprochene Sprachbefehl ignoriert wird, um ein schnelles Umschalten beispielsweise zwischen verschiedenen Playlists oder Sendern in dem Mediengerät zu vermeiden.

Eine weitere sehr vorteilhafte Ausgestaltung des erfindungsgemäßen Verfahrens kann es nun ergänzend vorsehen, dass bei der Abarbeitung der Sprachbefehle gemäß ihrer sortierten Reihenfolge auftretende Fehlermeldungen für mehrere Sprachbefehle der gleichen Gruppe jeweils nur einmal ausgegeben werden. Wird beispielsweise eine Fehlermeldung für eine bestimmte Gruppe von Funktionen generiert, dann kann diese lediglich einmal ausgegeben werden, um nicht mit jedem der ähnlichen Gruppe zugeordneten Befehl nochmals wiederholt zu werden. Wird beispielsweise der Sprachbefehl ausgegeben "Schalte die Massage für den Fahrer ein und schalte die Massage hinten links ein", dann würden die beiden erkannten Befehle in einem herkömmlichen System zu zweimal derselben Fehlermeldung führen, beispielsweise "Das Fahrzeug verfügt nicht über Massagesitze". In diesem Fall lässt sich diese Fehlermeldung zusammenfassen, sodass diese lediglich einmal ausgegeben wird und damit für eine das Sprachdialogsystem nutzende Person das Gefühl einer vergleichsweise "natürlichen" Unterhaltung entsteht, bei welcher nicht mehrfach gleiche Inhalte hintereinander identisch ausgegeben werden.

Das Sprachdialogsystem gemäß der Erfindung ist nun sehr ähnlich wie ein herkömmliches Sprachdialogsystem aufgebaut und verfügt über wenigstens ein Mikrofon und eine Einrichtung zur Spracherkennung und zum natürlichen Sprachverständnis. Das Sprachdialogsystem gemäß der Erfindung umfasst dabei wenigstens eine Recheneinheit, welche dazu eingerichtet ist, ein Verfahren im oben beschriebenen Sinn auszuführen.

Insbesondere können auch Sprachausgaben in dem Sprachdialogsystem vorgesehen werden, beispielsweise eine Sprachausgabe von Fehlermeldungen oder anderen Rückmeldungen jeglicher Art. Hierfür kann gemäß einer außerordentlich günstigen Weiterbildung des Sprachdialogsystems eine Einheit zur natürlichen Sprachgenerierung vorgesehen sein.

Das Sprachdialogsystem und das zugeordnete Verfahren lassen sich prinzipiell überall da nutzen, wo Sprachdialogsysteme zum Einsatz kommen. Insbesondere kann dies im Bereich von Fahrzeugen sein. Insbesondere in Fahrzeugen ist ein Sprachdialogsystem dabei von Vorteil, da es einer das Fahrzeug steuernden Person die Betätigung von Funktionen innerhalb des Fahrzeugs ermöglicht, ohne dass die Person sich vom Verkehrsgeschehen abwenden muss, was einerseits dem Komfort und andererseits der Verkehrssicherheit dient.

Weitere vorteilhafte Ausgestaltungen des erfindungsgemäßen Verfahrens und des Sprachdialogsystems gemäß der Erfindung ergeben sich dabei auch aus dem Ausführungsbeispiel, welches nachfolgend unter Bezugnahme auf die Figuren näher beschrieben ist.

Dabei zeigen:
- Fig. 1: ein Fahrzeug mit einem erfindungsgemäßen Sprachdialogsystem;
- Fig. 2: ein schematischer Ablauf zum Vorbereiten der Reihenfolge der Sprachbefehle; und
- Fig. 3: eine schematische Darstellung des Ablaufs während des Abarbeitens der Sprachbefehle.

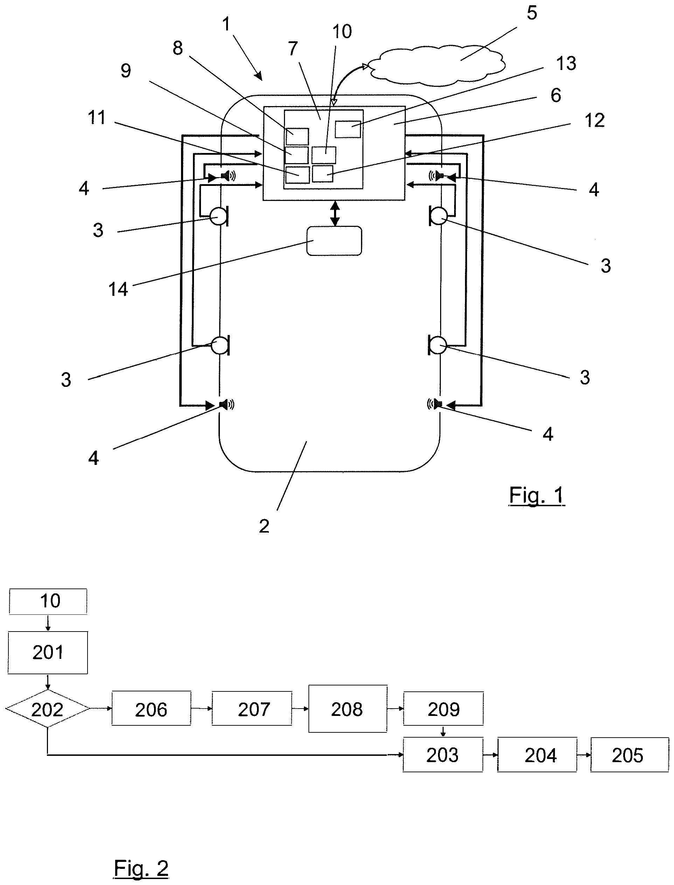

In der Darstellung der Figur 1 ist ein Sprachdialogsystem 1 in einem schematisch angedeuteten Fahrzeug 2 gezeigt. Das Sprachdialogsystem 1 verfügt in der hier dargestellten soweit prinzipiell üblichen Ausführungsform über vier einzelne Mikrofone 3 für jeden der Passagiere des Fahrzeugs 2 sowie eine dem jeweiligen Mikrofon 3 zugeordnete Ausgabeeinheit in Form eines Lautsprechers 4. Das Sprachdialogsystem 1 selbst kann dabei als reines in dem Fahrzeug 2 agierendes Sprachdialogsystem 1 ausgestaltet sein, was typischerweise als Embedded System bezeichnet wird. Es kann jedoch auch als reines Cloudsystem ausgebildet sein und seine Rechenoperationen auf einen fahrzeugexternen Server, welcher hier als Cloud 5 angedeutet ist, auslagern. Insbesondere soll das Sprachdialogsystem 1 als Hybridsystem ausgebildet sein, also mit einem Embedded Anteil und einem Cloud Anteil.

Die von den Mikrofonen aufgenommenen Spracheingaben werden an eine Headunit 6 weitergegeben, welche das eigentliche Sprachverarbeitungsmodul 7, z.B. als eine integrierte Recheneinheit, umfasst. Dieses Sprachverarbeitungsmodul 7 umfasst eine Signalvorverarbeitung 8, eine Komponente 9 zur Spracherkennung und eine Komponente zur semantischen Analyse, welche hier mit 10 bezeichnet ist und häufig auch mit dem englischen Begriff des Natural Language Understanding (NLU) bezeichnet wird. Die NLU Komponente 10 ist dabei in der Lage, mehrere von einer in dem Fahrzeug 2 befindlichen Person hintereinander gesprochenen Sprachbefehle in einer einzigen Äußerung bzw. Spracheingabe zu verarbeiten und in mehrere einzelne Sprachbefehle, sogenannte Intents, aufzusplitten. Ergänzend verfügt das Sprachverarbeitungsmodul 7 über eine Text-to-Speach Komponente 11 sowie eine Komponente zur natürlichen Sprachausgabe, welche häufig auch als Natural Language Generation oder NLG bezeichnet wird. Sie ist hier mit 12 bezeichnet. Ferner ist innerhalb des Sprachverarbeitungsmoduls 7 ein Dialogmanager 13 vorgesehen. Die Headunit 6 an sich ist mit einem Display 14 verbunden, welches gegebenenfalls auch im Rahmen des Sprachdialogs für entsprechende Anzeigen und dergleichen eingesetzt werden kann.

Wurden nun die einzelnen Sprachbefehle bzw. Intents in der erkannten bzw. gesprochenen Reihenfolge abgearbeitet, entsteht einerseits das Problem, das zeitliche Angaben die die das System nutzende Person gegeben hat, nicht berücksichtigt werden und das die gesprochene Reihenfolge nicht unbedingt die tatsächlich gewünschte und insbesondere nicht die effizienteste Reihenfolge zur Abarbeitung der Sprachbefehle sein muss.

So wurde beispielsweise der Befehl "Rufe Max Mustermann an und starte die Zielführung nach XY" dazu führen, dass bei einer sequentiellen Abarbeitung erst nach dem Beenden des Telefonats die Zielführung nach XY gestartet wird. Bei einer entsprechenden Priorisierung der erkannten Sprachbefehle lässt sich nun aber auch eine optimierte Reihenfolge realisieren. So kann zuerst die Zielführung gestartet werden und danach erst der Anruf getätigt werden. In der Folge steht die Zielführung der das Fahrzeug 2 nutzenden Person schon während des Telefonats zur Verfügung, was häufig ein Vorteil, zumindest jedoch nie ein Nachteil ist.

Nachfolgend soll daher eine Möglichkeit beschrieben werden, erkannte Sprachbefehle zu priorisieren, gesprochene Angaben zur zeitlichen Abarbeitung der Sprachbefehle zu berücksichtigen und zwei oder mehr aufeinander folgende Befehle mit hoher Ähnlichkeit durch einen einzigen sinngemäßen Befehl zu substituieren sowie gegebenenfalls Fehlern bei der Abarbeitung vorzugreifen.

Um dies zu erreichen werden nun zunächst alle in der Spracheingabe bzw. Sprachäußerung erkannten Sprachbefehle bzw. Intents aus den gelieferten Daten der NLU Komponente 10 inklusive der zu den jeweiligen Sprachbefehlen gehörenden Informationen extrahiert. Jedem der Sprachbefehle wird zunächst ein initialer Prioritätswert zugewiesen, beispielsweise ein Wert von 0. Zusätzlich erhält jeder der Sprachbefehle einen Wert, der der gesprochenen Position in der Spracheingabe bzw. Sprachäußerung entspricht.

Nachfolgend werden nun mehrere gegebenenfalls optionale Schritte beschrieben, um den Prioritätswert und damit die Reihenfolge, in welcher die Sprachbefehle abgearbeitet werden, entsprechend zu beeinflussen.

Zunächst wird geprüft, ob Intents identifiziert wurden, für die zusätzlich eine klare Information zur gewünschten Reihenfolge gesprochen wurde. Dies könnten Aufzählungen sein, wie beispielsweise "als erstes", "als zweites", "fange damit an", "als letztes" und "zum Schluss". Diese Intents sind von den weiteren Schritten ausgenommen und werden erst abschließend an der erkannten bzw. gesprochenen Position einer Reihenfolge der Sprachbefehle einfügt bevor mit der Abarbeitung begonnen wird. Wird dabei die gleiche Position mehrfach gesprochen, kann beispielsweise die erste zeitliche Angabe ignoriert werden, oder die Intents mit der gleichen Zeitangabe direkt aufeinanderfolgend einsortiert werden.

Für die verbleibenden Sprachbefehle bzw. Intents folgen mehrere optionale Schritte:
Zunächst erfolgt eine gruppen- bzw. domänenspezifische Gewichtung, um Intents in Abhängigkeit der ihnen zugehörigen Gruppe Domäne grundsätzlich vor Intents aus anderen Gruppen Domänen abarbeiten zu können. So kann zum Beispiel der initial festgelegte Wert der Priorität in Abhängigkeit der Gruppe, welcher der Sprachbefehl zugeordnet wird mittels eines ersten Prioritätswerts erhöht werden.

Verfügt das Sprachdialogsystem beispielsweise über die Möglichkeit die Gruppen Telefonie, Fahrzeugfunktionen, Medien, Nachrichten(messaging) und Navigation zu bedienen, könnte eine Gewichtung beispielsweise so aussehen, wie es nachfolgend angegeben ist, wobei ein niedrigerer Wert hier einer zeitlich früheren Ausführung - und damit einer höheren Priorität entspricht.
Fahrzeugfunktionen: 10
Navigation: 20
Medien: 30
Nachrichten:40
Telefonie:50

Idealerweise sind diese Werte nicht hart kodiert, sondern lassen sich aus einer Konfigurationsdatei auslesen, damit das Verhalten leicht optimiert werden bzw. die Gewichtung leicht deaktiviert werden kann. Entsprechend der zugehörigen Gruppe wird der initiale Prioritätswert um den so ermittelten ersten Prioritätswert erhöht. Dies kann vorzugsweise durch eine einfache Summenbildung erfolgen.

In einem nächsten Schritt werden die Sprachbefehle bzw. Intents innerhalb ihrer Gruppe priorisiert. Dazu kann beispielsweise zu dem bisherigen ersten Prioritätswert ein weiterer zweiter Prioritätswert addiert werden. Vorteilhaft kann es dabei sein, wenn die sich dann als Summe aus dem ersten und zweiten Prioritätswert neu ergebenden dritten Prioritätswerte nicht so geändert werden, dass die Sprachbefehle in den Wertebereich einer anderen Gruppe fallen. Entsprechend des oben beschriebenen Beispiels würden die zweiten Prioritätswerte also zwischen 1 und 9 liegen.

Auch diese Werte sind idealerweise nicht hart kodiert, sondern lassen sich aus einer Konfigurationsdatei auslesen, um das Verhalten leicht optimieren zu können. Wird der innerdomänenspezifische zweite Prioritätswert für jeden Intent auf 0 gesetzt, erfolgt keine zusätzliche Gewichtung innerhalb der Domäne.

Um zusätzlich auf Temporaladverbien, wie "vorher" oder "danach" reagieren zu können, wird in einem nächsten Schritt den Prioritätswerten ein weiter Korrekturwert hinzuaddiert. Die Intents werden dabei gemäß der gesprochenen Reihenfolge bearbeitet. Ferner wird für jeden Intent geprüft, ob eine Angabe zu einer vorherigen bzw. nachfolgenden Abarbeitung gemacht wurde. Wird beispielweise erkannt, das für einen Intent ein "vorher" gesprochen wurde, werden diesem Intent und allen zeitlich danach gesprochen Intents beispielsweise der Korrekturwert -100*i*a hinzuaddiert, wobei i sich mit jedem weiteren "vorher" um den Wert 1 erhöht. Die Variable a dient in dem Beispiel dazu, die Gewichtung zu deaktivieren, in dem der Wert entweder auf 1 (an) bzw. 0 (aus) festgelegt wird. Wird entsprechend ein "danach" oder vergleichbares erkannt, wird ein leicht modifizierter Wert +100*j*b addiert, wobei b auch hier analog dazu dient, um die Gewichtung zu deaktivieren. Die Variable j ist initial 1 und wird mit jedem folgenden "danach" um den Wert 1 erhöht.

Abschließend werden die Intents gemäß ihrer finalen Prioritätswerte, also der Summe aus dem ersten und dem zweiten Prioritätswert und dem Korrekturwert sortiert. Kommt es zu gleichen finalen Prioritätswerten, dann werden die betroffenen Intents zusätzlich gemäß der gesprochenen Reihenfolge sortiert.

Um gegebenenfalls Dialoge zu verkürzen werden die Intents, vorzugsweise paarweise, auf Ähnlichkeit geprüft und gegebenenfalls nach einem Regelwerk durch einen einzelnen gleichwertigen Intent ersetzt.

Anschließend werden die Intents, für die eine konkrete Zeitangabe ausgesprochen wurde, gemäß der gesprochenen Information einsortiert. Ergeben sich dabei Lücken, werden diese eliminiert. Zum Beispiel bei einer Eingabe wie "Schalte die Sitzheizung ein und mache als drittes das Licht an" werden die Sprachbefehle gemäß dem beschriebenen Ablauf in eine Reihenfolge sortiert. Nach dem Einsortieren des zweiten Sprachbefehls an dritter Stelle ergibt sich auf Position zwei jedoch eine Lücke, die hier eliminiert wird, indem der an dritter Stelle einsortierte Intent vorgezogen wird.

Abschließend erfolgt optional eine Nachbearbeitung der Intents nach einem definierten Regelwerk, um sinnloses Verhalten bzw. gefühlte Fehler zu vermeiden, oder um mehrere Intents zu einem einzelnen sinngemäßen Intent zusammenzufassen. Beziehen sich beispielsweise zwei zeitlich aufeinanderfolgende Intents auf das Abspielen von Medieninhalten, könnte eine Regel definiert werden, dass nur der zeitlich spätere Intent ausgeführt wird. Auf der Spracheingabe "Spiele Micheal Jackson auf Spotify und spiele den Sender SWR3", würde dann z.B. nur der Sprachbefehl "Spiele SWR3" ausgeführt.

Figur 2 verdeutlicht dies, indem in der links oben befindlichen Box die NLU Komponente 10 nochmals symbolisiert ist. In der nachfolgenden mit 201 bezeichneten Box werden dann die entsprechenden Daten extrahiert, um sie der Reihenfolge zugrunde zu legen. Ist bereits eine Nummerierung vorgegeben, verzweigt die Box 202 direkt zur Box 203, welche die Sprachbefehle mit ihrer Reihenfolge entsprechend zusammenführt und der abschließenden Nachbearbeitung durch das Regelwerk in der Box 204 zuführt, bevor die endgültige Reihenfolge in der Box 205 feststeht. Liegt eine solche Nummerierung nicht vor, was der typischere Fall sein wird, wird im Bereich der mit 206 bezeichneten Box die Priorisierung entsprechend der Gruppe, in welcher der Sprachbefehl eingeordnet wird, vorgenommen, der erste Prioritätswert wird also festgelegt. In der mit 207 bezeichneten Box wird dann der zweite Prioritätswert festgelegt, der Sprachbefehl also innerhalb seiner Gruppe nochmals priorisiert. Die mit 208 bezeichnete Box sieht dann die Verarbeitung der Temporaladverbien und der gesprochenen zeitlichen Abläufe in dem oben beschriebenen Sinn vor, erzeugt also letztlich die Korrekturwerte, welche in der mit 209 bezeichneten Box entsprechend verrechnet und der Zusammenführung der Sprachbefehle mit ihren Prioritätswerten bzw. den Nummern ihrer Reihenfolge entsprechend der Prioritätswerte zugeführt werden. Die Abläufe der Boxen 204 und 205 schließen sich dann analog an.

An einem konkreten Beispiel könnte das so aussehen. Die Spracheingabe soll lauten: "Setze Sindelfingen als Zwischenziel, Fahre nach Stuttgart, aktiviere die Sitzheizung für den Fahrer, schalte die Sitzheizung für den Beifahrer auch ein, stelle davor die Temperatur auf 21° und aktiviere als erstes die Massage!"

Intents in gesprochener Reihenfolge:
Navi.hinzufügen.zwischenziel <Sindelfingen>; Navi.hinzufügen.ziel <Stuttgart>;
funktion.einschalten.sitzheizung <fahrer>; funktion.einschalten.sitzheizung <beifahrer>;
funktion.einstellen.temp <21><davor>; funktion.einschalten.massage <als erstes>

Intents nach Prüfung auf mitgesprochene Reihenfolge:
Mit Angabe: funktion.einschalten.massage <als erstes>
Ohne Angabe: Navi.hinzufügen.zwischenziel <Sindelfingen>; Navi.hinzufügen.ziel <Stuttgart>; funktion.einschalten.sitzheizung <fahrer>; funktion.einschalten.sitzheizung <Beifahrer>; funktion.einstellen.Temp <21 ><davor>

Intents ohne erwartete Reihenfolge nach domänenspezifischer Priorisierung: funktion.einschalten.sitzheizung <fahrer>; funktion.einschalten.sitzheizung <beifahrer>; funktion.einstellen.Temp <21><davor>; Navi.hinzufügen.zwischenziel <Sindelfingen>; Navi.hinzufügen.ziel <Stuttgart>;

Intents ohne erwartete Reihenfolge nach innerdomänenspezifischer Priorisierung:
funktion.einschalten.sitzheizung <fahrer>; funktion.einschalten.sitzheizung <beifahrer>;
funktion.einstellen.Temp <21><davor>; Navi.hinzufügen.ziel <Stuttgart>;
Navi.hinzufügen.zwischenziel <Sindelfingen>;

Intents ohne erwartete Reihenfolge nach Priorisierung gemäß der vorkommenden Temporaladverbien bzw. temporaler Konjunktionen:
funktion.einstellen.Temp <21><davor>; funktion.einschalten.sitzheizung <fahrer>;
funktion.einschalten.sitzheizung <beifahrer>; Navi.hinzufügen.ziel <Stuttgart>;
Navi.hinzufügen.zwischenziel <Sindelfingen>;

Intents nach dem Zusammenführen:
funktion.einschalten.massage <als erstes>; funktion.einstellen.Temp <21><davor>;
funktion.einschalten.sitzheizung <fahrer>; funktion.einschalten.sitzheizung <beifahrer>;
Navi.hinzufügen.ziel <Stuttgart>; Navi.hinzufügen.zwischenziel <Sindelfingen>;

Intents nach der regelbasierten Nachbearbeitung:
funktion.einschalten.massage <als erstes>; funktion.einstellen.Temp <21><davor>;
funktion.einschalten.sitzheizung <vorne>; Navi.hinzufügen.ziel <Stuttgart>;
Navi.hinzufügen.zwischenziel <Sindelfingen>;
Nach der Sortierung in diese Reihenfolge beginnt das System die Sprachbefehle einzeln und nacheinander in der ermittelten Reihenfolge abzuarbeiten.

Treten während des Abarbeitens einzelner Intents Fehler auf, die in gleichem Maße für zeitlich später abzuarbeitende Intents aus der gleichen Gruppe auftreten würden, ist das System in der Lage anhand eines festen Regelwerks, diese zeitlich späteren Intents aus der Abarbeitungsschlange zu eliminieren. Beispielsweise soll es so sein, dass das Fahrzeug nicht über Massagesitze verfügt, der Nutzer spricht aber "Schalte die Massage für den Fahrer ein und schalte die Massage hinten links ein". Würden beide erkannten Intents einfach abgearbeitet, so würde zweimal derselbe Fehlerprompt "Dieses Fahrzeug verfügt leider nicht über Massagesitze" ausgegeben. Durch eine Zusammenfassung wird der Fehlerprompt jedoch nur einmal ausgegeben. Dies reicht zur Information des Nutzers aus und vermittelt ein eher natürliches Dialogverhalten.

Spricht ein Nutzer während des Ausführens der zuvor erkannten Sprachbefehle zwischendurch weitere Sprachbefehle, kann das System optional die neu gesprochenen Sprachbefehle ignorieren oder der Warteschlange der noch abzuarbeitenden Befehle hinzufügen.

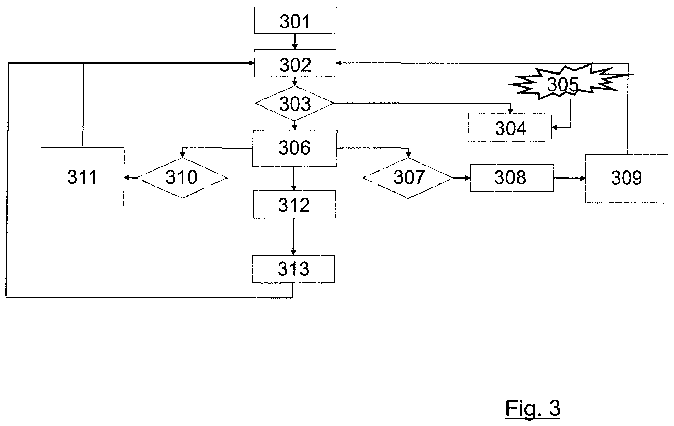

In der Darstellung der Figur 3 wird dies aufgegriffen. Die Box 301 startet die Abarbeitung der zuvor erstellten, bereits sortierten bzw. priorisierten Sprachbefehle einer Eingabekette, d.h. einer Befehlskette mit aufeinanderfolgenden Sprachbefehlen. Die Box 302 symbolisiert dann das Einlesen der Eingabekette, die Abfrage 303 prüft, ob eine Eingabekette vorhanden ist, falls nein wird in Box 304 die Ermittlung beendet und der Prozess abgebrochen. Der Sprachdialog wird dann beendet. Selbiges gilt, wenn der Dialog, wie in Box 305 angedeutet, durch den Nutzer abgebrochen wird. Falls die Eingabekette nicht leer ist, wird in der Box 306 der erste in der priorisierten Eingabekette befindliche Sprachbefehl ausgeführt. Ergibt eine Prüfung in Box 307 ein Fehler, wird der in 306 abgearbeitete Befehl in Box 308 aus der Eingabekette entfernt und die in der Eingabekette verbleibenden Befehle anhand eines Regelwerks geprüft. Ist zu erwarten, dass ein Befehl denselben oder einen vergleichbaren Fehler verursachen würde, werden diese Befehle in Box 309 aus der Befehlsschlange gelöscht. Ein Beispiel für den Fehlerfall ist beispielsweise "Schalte die XY Massage für den Fahrer ein und schalte die YZ Massage hinten rechts ein". Die Befehle lassen sich nicht zusammenfassen und würden daher sequentiell ausgeführt. Beim Ausführen des ersten Befehls tritt nun ein Fehler "In diesem Fahrzeug gibt es leider keine Massagesitze" auf. Der Befehl wird dann aus der Befehlsschlange gelöscht, da er bereits abgearbeitet wurde. Als nächstes werden die verbleibenden Befehle geprüft und in diesem Fall wird auch der zweite gesprochene Befehl verworfen und der Dialog beendet.

Die Box 312 beschreibt dann den Normalfall, nämlich dass der Sprachbefehl erfolgreich und ohne Unterbrechung abgearbeitet wurde, wonach dieser gemäß der Box 313 aus der Eingabekette gelöscht wird, wonach wieder zur Box 302 zurückgesprungen wird, um den Ablauf von neuem zu beginnen und den nächsten Befehl der Eingabekette auszuführen. Dieser Vorgang wird solange wiederholt, bis alle Sprachbefehle der Eingabekette entsprechend abgearbeitet sind und der Prozess in der Box 304 endet.

In der Box 310 wird der Fall behandelt, dass eine neue Spracheingabe eingeht, während die Befehle der Eingabekette Befehle noch nicht vollständig abgearbeitet sind. In diesem Fall wird in Box 311 die Verarbeitung des momentan in Bearbeitung befindlichen Befehls zunächst ausgeführt. Danach wird dieser Befehl aus der Befehlskette entfernt und der neu erkannte Befehl an erster Stelle der Befehlskette eingefügt. Die um die neue Spracheingabe ergänzte Eingabekette wird dann wieder der Box 302 zur Verarbeitung zugeführt.

Um die Funktion noch weiter zu optimieren verfügt das Sprachdialogsystem 1 für die Ausgabe von Prompts, z.B. Fehler- oder Bestätigungsmeldungen, neben einer klassischen Text-to Speech Komponente 11 optional über eine NLG Komponente 12, die es ermöglicht, die ausgegebenen Prompts natürlicher zu gestalten. Spricht ein Nutzer mehrere Sprachbefehle, die ohne Rückfragen direkt ausgeführt werden können, führt dies ohne eine NLG Komponente 12 oder aufwändige Regelwerke dazu, dass die jeweiligen Bestätigungsprompt einfach der Reihe nach ausgegeben werden. Zum Beispiel "Ich schalte die Sitzheizung ein. Ich schalte die Leseleuchte ein." An dieser Stelle ermöglicht es die NLG Komponente 12 beispielsweise Prompts zu verknüpfen oder passender zu formulieren. Mit NLG Komponente 12 könnte die Rückmeldung dann beispielsweise lauten "Ich schalte die Sitzheizung ein und ich schalte die Leseleuchte ein" oder noch natürlicher/besser "Ich schalte die Sitzheizung und die Leseleuchte ein".

Ergänzend oder alternativ zu der Sprachausgabe sind auch auf dem Display 14 angezeigte Fehler- oder Bestätigungsmeldungen denkbar.

## Patentansprüche

1. Verfahren zum Betreiben eines Sprachdialogsystems (1), bei dem Sprachbefehle einer Spracheingabe erfasst und zur weiteren Verarbeitung mit einer Priorität versehen werden,
**dadurch gekennzeichnet, dass**
von mehreren aufeinanderfolgenden Sprachbefehlen jeder erkannte Sprachbefehl einer inhaltlichen Gruppe von Befehlen zugeordnet wird, wobei die Sprachbefehle mit einem für die jeweilige Gruppe vorgegebenen ersten Prioritätswert verknüpft werden, wonach jedem der Sprachbefehle innerhalb der Gruppe, entsprechend einer vorgegebenen Prioritätenliste der der Gruppe zugeordneten Befehle, ein zweiter Prioritätswert zugeordnet wird,
**dadurch gekennzeichnet, dass**
aus dem ersten Prioritätswert und dem zweiten Prioritätswert ein dritter Prioritätswert gebildet wird, und wonach die Sprachbefehle entsprechend ihres finalen dritten Prioritätswerts in eine Reihenfolge einsortiert und in dieser Reihenfolge der Abarbeitung zugeführt werden, wobei zusätzlich die Spracheingabe bezüglich Temporaladverbien zu den Sprachbefehlen ausgewertet wird, wobei für jede der beiden erkannten Richtungen der Temporaladverbien ein Korrekturwert erzeugt wird, der sich mit jedem weiteren Temporaladverb in derselben Richtung verändert, wobei der jeweilige dritte Prioritätswert jedes Sprachbefehls mit dem Korrekturwert verrechnet wird, und wobei die erkannten Richtungen angeben, ob ein Befehl vorher oder nachher ausgeführt werden soll.

2. Verfahren nach Anspruch 1,
**dadurch gekennzeichnet, dass**
der zweite Prioritätswert kleiner als die Differenz zwischen zwei benachbarten ersten Prioritätswerten ist.

3. Verfahren nach Anspruch 1 oder 2,
**dadurch gekennzeichnet, dass**
bei gleichen finalen Prioritätswerten die Sortierung gemäß der gesprochenen Reihenfolge der Sprachbefehle erfolgt.

4. Verfahren nach einem der Ansprüche 1 bis 3,
**dadurch gekennzeichnet, dass**
der Korrekturwert einen je nach Richtung des Temporaladverbs positiven oder negativen Korrekturfaktor umfasst.

5. Verfahren nach einem der Ansprüche 1 bis 4,
**dadurch gekennzeichnet, dass**
die Spracheingabe bezüglich konkreter Angaben zur Reihenfolge der Sprachbefehle ausgewertet wird, wobei eine erkannte Reihenfolge vorrangig zu den finalen Prioritätswerten für die Einsortierung in die Reihenfolge verwendet wird.

6. Verfahren nach einem der Ansprüche 1 bis 5,
**dadurch gekennzeichnet, dass**
die Sprachbefehle auf durch semantische Prüfung ermittelte Ähnlichkeiten geprüft werden, wobei einen vorgegebenen Ähnlichkeitsgrad überschreitende Sprachbefehle aus derselben Gruppe von Sprachbefehlen zusammengefasst werden.

7. Verfahren nach einem der Ansprüche 1 bis 6,
**dadurch gekennzeichnet, dass**
die Sprachbefehle auf definierte Regeln überprüft werden, um logisch nicht sinnvolle Sprachbefehle zu eliminieren, wobei die Regeln definieren im Fall von zwei aufeinanderfolgenden, sich auf das Abspielen von Medieninhalten beziehenden Sprachbefehlen nur den zeitlich spätere Sprachbefehl auszuführen.

8. Verfahren nach einem der Ansprüche 1 bis 7,
**dadurch gekennzeichnet, dass**
bei der Abarbeitung der Sprachbefehle gemäß ihrer sortierten Reihenfolge auftretende Fehlermeldungen für mehrere Sprachbefehle der gleichen Gruppe jeweils nur einmal ausgegeben werden.

9. Sprachdialogsystem (1) mit wenigstens einem Mikrofon (3) und einer Einrichtung zur Spracherkennung (9) und zum natürlichen Sprachverständnis (10) mit wenigstens einer Recheneinheit (7), die dazu eingerichtet ist, ein Verfahren nach einem der Ansprüche 1 bis 8 auszuführen.

## Claims

1. Method for operating a speech dialog system (1), in which voice commands of a voice input are recorded and assigned a priority for further processing,
**characterized in that**
out of a plurality of successive voice commands, each recognized voice command is allocated to a content-related group of commands, the voice commands being linked to a first priority value which is predefined for the particular group, after which a second priority value is allocated to each of the voice commands within the group according to a predefined priority list of the commands allocated to the group,
**characterized in that**
a third priority value is formed from the first priority value and the second priority value, and after which the voice commands are sorted into a sequence according to their final third priority value and are fed for processing in this order, the voice input being additionally evaluated with respect to temporal adverbs for the voice commands, a correction value being generated for each of the two recognized directions of the temporal adverbs, which correction value changes with each further temporal adverb in the same direction, the particular third priority value of each voice command being offset against the correction value, and the recognized directions indicating whether a command should be executed before or after.

2. Method according to claim 1,
**characterized in that**
the second priority value is smaller than the difference between two adjacent first priority values.

3. Method according to either claim 1 or claim 2,
**characterized in that**
if the final priority values are the same, the sorting is done according to the spoken sequence of the voice commands.

4. Method according to any of claims 1 to 3,
**characterized in that**
the correction value includes a positive or negative correction factor depending on the direction of the temporal adverb.

5. Method according to any of claims 1 to 4,
**characterized in that**
the voice input is evaluated with respect to concrete information on the sequence of the voice commands, a recognized sequence being primarily used for the final priority values for sorting into the sequence.

6. Method according to any of claims 1 to 5,
**characterized in that**
the voice commands are checked for similarities determined by semantic testing, voice commands that exceed a predefined degree of similarity being grouped together from the same group of voice commands.

7. Method according to any of claims 1 to 6,
**characterized in that**
the voice commands are checked for defined rules in order to eliminate voice commands that do not make logical sense, the rules defining that in the case of two successive voice commands relating to the playback of media content, only the later voice command is to be executed.

8. Method according to any of claims 1 to 7,
**characterized in that**
during the processing of voice commands according to their sorted sequence, error messages that occur for a plurality of voice commands of the same group are in each case output only once.

9. Speech dialog system (1) having at least one microphone (3) and a device for speech recognition (9) and for natural speech understanding (10), having at least one computing unit (7) which is designed to carry out a method according to any of claims 1 to 8.

## Revendications

1. Procédé permettant de faire fonctionner un système de dialogue vocal (1), dans lequel des commandes vocales d'une entrée vocale sont reconnues et dotées d'une priorité en vue d'un traitement ultérieur,
**caractérisé en ce que**
parmi plusieurs commandes vocales successives, chaque commande vocale reconnue est affectée à un groupe de commandes en fonction du contenu, dans lequel les commandes vocales sont associées à une première valeur de priorité prédéfinie pour le groupe respectif, après quoi une deuxième valeur de priorité est affectée à chacune des commandes vocales au sein du groupe, de manière à correspondre à une liste de priorités prédéfinie des commandes affectées au groupe,
**caractérisé en ce que**
une troisième valeur de priorité est formée à partir de la première valeur de priorité et de la deuxième valeur de priorité, et après quoi les commandes vocales sont classées dans un ordre de manière à correspondre à leur troisième valeur de priorité finale et sont amenées à être traitées dans cet ordre, dans lequel l'entrée vocale est en outre évaluée en ce qui concerne les adverbes temporels relatifs aux commandes vocales, dans lequel une valeur de correction est générée pour chacun des deux sens reconnus des adverbes temporels, laquelle valeur de correction varie avec chaque adverbe temporel supplémentaire dans le même sens, dans lequel la troisième valeur de priorité respective de chaque commande vocale est compensée avec la valeur de correction et dans lequel les sens reconnus indiquent si une commande doit être exécutée avant ou après.

2. Procédé selon la revendication 1,
**caractérisé en ce que**
la deuxième valeur de priorité est inférieure à la différence entre deux premières valeurs de priorité adjacentes.

3. Procédé selon la revendication 1 ou 2,
**caractérisé en ce que**
lorsque les valeurs de priorité finales sont identiques, le tri s'effectue selon l'ordre parlé des commandes vocales.

4. Procédé selon l'une des revendications 1 à 3,
**caractérisé en ce que**
la valeur de correction comprend un facteur de correction positif ou négatif selon le sens de l'adverbe temporel.

5. Procédé selon l'une des revendications 1 à 4,
**caractérisé en ce que**
l'entrée vocale est évaluée par rapport à des indications concrètes sur l'ordre des commandes vocales, dans lequel un ordre reconnu est utilisé en premier lieu par rapport aux valeurs de priorité finales pour le classement dans l'ordre.

6. Procédé selon l'une des revendications 1 à 5,
**caractérisé en ce que**
les commandes vocales sont analysées quant aux similitudes déterminées par une analyse sémantique, dans lequel les commandes vocales dépassant un degré de similitude prédéfini et provenant du même groupe de commandes vocales sont réunies.

7. Procédé selon l'une des revendications 1 à 6,
**caractérisé en ce que**
les commandes vocales sont vérifiées en ce qui concerne des règles définies afin d'éliminer des commandes vocales qui ne sont pas logiques, dans lequel les règles définissent, dans le cas de deux commandes vocales successives se rapportant à la lecture de contenus multimédia, de n'exécuter que la commande vocale la plus tardive dans le temps.

8. Procédé selon l'une des revendications 1 à 7,
**caractérisé en ce que**
des messages d'erreur apparaissant lors du traitement des commandes vocales selon leur ordre trié ne sont émis respectivement qu'une seule fois pour plusieurs commandes vocales du même groupe.

9. Système de dialogue vocal (1) comportant au moins un microphone (3) et un dispositif permettant la reconnaissance vocale (9) et permettant la compréhension du langage naturel (10) comportant au moins une unité de calcul (7) qui est configurée pour exécuter un procédé selon l'une des revendications 1 à 8.
